# EUROPÄISCHE PATENTSCHRIFT

(11) **EP 2 788 186 B1**
(45) Veröffentlichungstag und Bekanntmachung des Hinweises auf die Patenterteilung: **11.05.2016**
(21) Anmeldenummer: 12824683.2
(22) Anmeldetag: 04.12.2012
(51) Int. Cl.: B32B 27/08, B32B 27/12, B32B 27/32, B32B 27/28, B32B 27/34, B64B 1/58, A63H 27/10

(54) **METALLSCHICHT-FREIE MEHRSCHICHTFOLIE MIT GERINGEM FLÄCHENGEWICHT**
MULTILAYER FILM NOT COMPRISING A METAL LAYER AND HAVING A LOW SURFACE WEIGHT
FILM MULTICOUCHE NE COMPRENANT PAS DE COUCHE MÉTALLIQUE ET AYANT UNE MASSE SURFACIQUE FAIBLE

(30) Priorität: 09.12.2011 DE 102011120604; 30.03.2012 DE 102012006416
(43) Veröffentlichungstag der Anmeldung: 15.10.2014
(73) Patentinhaber: Maria Soell High Technology Films GmbH, 63667 Nidda-Eichelsdorf (DE)
(72) Erfinder: FISCHER, Christian, Erich, 84107 Weihmichl (DE); BORM, Achim, 61231 Bad Nauheim (DE); BLUM, Thomas, 27283 Verden (DE)
(74) Vertreter: Meyer-Dulheuer, Karl-Hermann
(86) Internationale Anmeldenummer: PCT/EP2012/004990
(87) Internationale Veröffentlichungsnummer: WO 2013/083261

(56) Entgegenhaltungen:
- WO-A1-2006/094733
- US-A1- 2003 111 760
- US-A1- 2011 123 785

## Beschreibung

Die vorliegende Erfindung betrifft eine Metallschicht-freie Mehrschichtfolie mit einem Flächengewicht von ≤ 33 g/m², einem Schrumpfverhalten von ≤ 10% bei 90 °C (sowohl in Maschinenrichtung als auch quer zur Maschinenrichtung, bestimmt als Maßänderung nach DIN 53377) und einem wenigstens neunschichtigen Schichtaufbau umfassend unter anderem eine Schicht (a) aufgebaut aus wenigstens einem thermoplastischen Olefin-Homo- oder Copolymeren als eine der Außenschichten, eine wie nachstehend definiert nicht peelbare Haftvermittlerschicht (b), eine Schicht (c) aufgebaut aus wenigstens einem Homo- und/oder Copolyamid, wenigstens eine innenliegende, an die Schicht (c) angrenzende Gasbarriereschicht (d), die sich zumindest in der Zusammensetzung der Polymerkomponente(n) von den Schichten (c) und (e) unterscheidet; eine an die Gasbarriereschicht (d) angrenzende Schicht (e) aufgebaut aus wenigstens einem Homo- und/oder Copolyamid, und eine Schicht (i) aufgebaut aus wenigstens einem Homo- und/oder Copolyamid als eine der Außenschichten, eine Verwendung einer solchen Mehrschichtfolie zur Herstellung eines Auftriebskörpers sowie einen Auftriebskörper aus einer solchen Mehrschichtfolie. Aus dem Stand der Technik, z.B. aus US 6,435,935 B1, WO 2010/075034, DE 10 2007 013 710 A1 und US 2009/0022919 A1, sind bereits Mehrschichtfolien bekannt, die sich zur Herstellung von Auftriebskörpern, wie beispielsweise Ballons, eignen. Um eine ausreichende Gasdurchlässigkeits-Barriere gegen Wasserdampf, Luft und insbesondere Helium zu gewährleisten, weisen diese Mehrschichtfolien jedoch meist eine Metallschicht auf.

Weiterhin ist aus der US 2003/111760 A1 eine transparente Folie für Ballons bekannt, die sich aus einer vierschichtigen Basisfolie und einer darauf aufgebrachten relativ harten Texturschicht zusammensetzt. Die Texturschicht wird vorzugsweise mit einem Prägeverfahren behandelt, um einen optischen Effekt auf dem Ballon zu erzielen.

Auftriebskörper aus einer Metallschicht-haltigen Mehrschichtfolie können problematisch sein, da diese Auftriebskörper aufgrund ihrer elektrischen Leitfähigkeit, beispielsweise bei Blitzschlag oder Berührung des Auftriebskörpers mit elektrischen Oberleitungen, eine Gefahrenquelle darstellen können.

Weiterhin weisen viele der aus dem Stand der Technik bekannten Mehrschichtfolien ein relativ hohes Gewicht auf, wodurch der Auftrieb eines aus einer solchen Mehrschichtfolie hergestellten Auftriebskörpers beeinträchtigt wird. Dies ist insbesondere der Fall, wenn das den Auftriebskörper umgebende Medium Luft ist.

Nachteilig bei diesen aus dem Stand der Technik bekannten Mehrschichtfolien ist ferner, dass sie oftmals über ungeeignete mechanische Eigenschaften, wie eine nicht ausreichende Durchstoßfestigkeit oder Dehnbarkeit, verfügen.

Es besteht daher ein Bedarf an Mehrschichtfolien, die sich zur Herstellung von Auftriebskörpern mit verminderten Risiken gegenüber den bekannten Auftriebskörpern eignen.

Aufgabe der vorliegenden Erfindung war es daher, eine Mehrschichtfolie zur Verfügung zu stellen, die sich trotz ihrer hohen Gasbarrierewirkung zur Herstellung von Auftriebskörpern eignet, wobei solche flugfähigen- bzw. schwimmfähigen Körper keine Gefahrenquelle - wie vorbeschrieben - darstellen.

Diese Aufgabe wird durch die Bereitstellung einer Mehrschichtfolie ohne Metallschicht mit einem Flächengewicht von ≤ 33 g/m² und einem wenigstens neunschichtigen Schichtaufbau umfassend
(a) eine Schicht (a) aufgebaut aus wenigstens einem thermoplastischen Olefin-Homo- oder Copolymeren, als eine der Außenschichten,
(b) eine im Sinne der vorliegenden Erfindung nicht peelbare, gegebenenfalls mehrlagige Haftvermittlerschicht (b),
(c) eine Schicht (c) aufgebaut aus wenigstens einem Homo- und/oder Copolyamid,
(d) wenigstens eine innenliegende, an die Schicht (c) angrenzende, Gasbarriereschicht (d), die sich zumindest
   in der Zusammensetzung der Polymerkomponente(n) von den Schichten (c) und (e) unterscheidet;
(e) eine an die Gasbarriereschicht (d) angrenzende Schicht (e) aufgebaut aus wenigstens einem Homo- und/oder Copolyamid, und
(f) eine im Sinne der vorliegenden Erfindung nicht peelbare, gegebenenfalls mehrlagige Haftvermittlerschicht (f),
(g) wenigstens eine innenliegende Schicht (g) aufgebaut aus wenigstens einem thermoplastischen Olefin-Homo- oder Copolymeren,
(h) eine im Sinne der vorliegenden Erfindung nicht peelbare, gegebenenfalls mehrlagige Haftvermittlerschicht (h),
(i) eine Schicht (i) aufgebaut aus wenigstens einem Homo- und/oder Copolyamid als eine der Außenschichten,
welche sowohl in Maschinenrichtung als auch quer zur Maschinenrichtung ein Schrumpfverhalten von ≤ 10% bei 90 °C, bestimmt als Maßänderung nach DIN 53377, aufweist, gelöst.

Unter dem Begriff "Metallschicht-frei" bzw. "ohne Metallschicht" wird erfindungsgemäß verstanden, dass die Mehrschichtfolie keine Metallschicht, d.h. keine Metallfolie oder aufgedampfte Schicht aus einem Metall oder einer Metallverbindung, wie z.B. Aluminium oder Aluminiumoxid, enthält. Die Schichten der erfindungsgemäßen Mehrschichtfolie können jedoch geringe Mengen an Metall-haltigen Additiven wie Metallverbindungen, beispielsweise als Farbstoffe, beinhalten, wobei diese Metall-haltigen Additive vorzugsweise in dispergierter Form innerhalb der jeweiligen Schicht(en) vorliegen und keine zusammenhängende Schicht bilden.

Keine der Haftvermittlerschichten der erfindungsgemäßen, metallschichtfreien Mehrschichtfolien ist peelbar, d. h. trennbar durch einen Kohäsionspeel der jeweiligen Haftvermittlerschicht.

Mit dem Begriff "Maschinenrichtung" wird erfindungsgemäß die Produktionsrichtung bezeichnet, in der die Mehrschichtfolie hergestellt und ggf. aufgerollt wird.

In einer bevorzugten Ausführungsform weist die erfindungsgemäße Mehrschichtfolie sowohl in Maschinenrichtung als auch quer zur Maschinenrichtung ein Schrumpfverhalten von ≤ 7%, vorzugsweise ≤ 5%, bei 90 °C, bestimmt als Maßänderung nach DIN 53377, auf.

Die erfindungsgemäße Mehrschichtfolie zeichnet sich außerdem durch ein geringes Flächengewicht von ≤ 33 g/m², vorzugsweise ≤ 31 g/m², besonders bevorzugt ≤ 28 g/m² aus.

Die erfindungsgemäße Mehrschichtfolie weist vorzugsweise eine hohe Durchstoßfestigkeit, besonders bevorzugt von mindestens 100 N, ganz besonders bevorzugt von mindestens 120 N, bestimmt nach DIN 53373, auf.

Vorzugsweise weist die erfindungsgemäße Mehrschichtfolie eine Dehnbarkeit sowohl in Maschinenrichtung als auch quer zur Maschinenrichtung von wenigstens 60%, besonders bevorzugt von wenigstens 80%, und ganz besonders bevorzugt von wenigstens 100%, auf. Die Dehnbarkeit in Maschinenrichtung kann höher als in Querrichtung dazu sein, vorzugsweise ist die Dehnbarkeit in Maschinenrichtung und in die Querrichtung dazu ungefähr identisch.

Die durchschnittliche Dichte der erfindungsgemäßen Mehrschichtfolie beträgt vorzugsweise höchstens 1,1 g/cm³, besonders bevorzugt höchstens 1,05 g/cm³.

Die Schicht (a) und die Schicht(g) der erfindungsgemäßen Mehrschichtfolie sind jeweils, gleich oder verschieden voneinander, aus wenigstens einem thermoplastischen Olefin-Homo- oder Copolymeren aufgebaut.

Vorzugsweise können zur Herstellung der Schicht (a) und der Schicht (g) der erfindungsgemäßen Mehrschichtfolie jeweils, gleich oder verschieden voneinander, thermoplastische Olefin-Homo-oder Copolymere von α,β-ungesättigten Olefinen mit 2-10 Kohlenstoffatomen und/oder Cyclo-Olefin-Copolymere (COC) eingesetzt werden.

Geeignete Olefin-Homopolymere sind vorzugsweise ausgewählt aus der Gruppe umfassend Ethylen-Homopolymere (Polyethylene, PE), vorzugsweise LDPE und HDPE, Propylen-Homopolymere (Polypropylene, PP), Butylen-Homopolymere (Polybutylene, PB) und Isobutylen-Homopolymere (Polyisobutylene, PIB) oder Mischungen aus wenigstens zwei der genannten Polymere. Mit "LDPE" wird Polyethylen niedriger Dichte bezeichnet, welches eine Dichte im Bereich von 0,86-0,93 g/cm³ aufweist und sich durch einen hohen Verzweigungsgrad der Moleküle auszeichnet. Mit "HDPE" wird Polyethylen hoher Dichte bezeichnet, welches nur eine geringe Verzweigung der Molekülkette aufweist, wobei die Dichte im Bereich zwischen 0,94 und 0,97 g/cm³ liegen kann.

Geeignete Olefin-Copolymere sind vorzugsweise Copolymere von Ethylen und/oder Propylen und wenigstens einem α-Olefin mit mindestens 4, vorzugsweise mit 4-10, besonders bevorzugt mit 4-8 Kohlenstoffatomen, ganz besonders bevorzugt Copolymere von Ethylen und/oder Propylen mit wenigstens einem α-Olefin ausgewählt aus der Gruppe umfassend Buten, Hexen und Octen. Der α-Olefin-Anteil im Olefin-Copolymeren beträgt vorzugsweise höchstens 25 Gew.-%, besonders bevorzugt höchstens 15 Gew.-%, jeweils bezogen auf das Gesamtgewicht des Olefin-Copolymeren.

Besonders geeignete Copolymere von Ethylen und wenigstens einem α-Olefin mit mindestens 4 Kohlenstoffatomen sind LLDPE und/oder mPE. Mit "LLDPE" werden lineare Ethylen-Copolymere niedriger Dichte bezeichnet, welche durch das Vorhandensein einer linearen Hauptkette mit daran befindlichen Seitenketten gekennzeichnet sind und eine Dichte im Bereich von 0,86 und 0,94 g/cm³ aufweisen. Mit "mPE" werden Ethylen-Copolymere bezeichnet, die mittels Metallocen-Katalysatoren polymerisiert wurden und vorzugsweise eine Dichte im Bereich von 0,88 und 0,93 g/cm³ aufweisen.

Besonders geeignete Copolymere von Propylen sind Copolymere von Propylen und wenigstens einem α-Olefin mit 2 bzw. 4-6 Kohlenstoffatomen, besonders bevorzugt ausgewählt aus der Gruppe umfassen Propylen-Ethylen-Copolymere, Propylen-Butylen-Copolymere, Propylen-Isobutylen-Copolymere und Mischungen aus wenigstens zwei der genannten Copolymeren.

Bevorzugte Olefin-Homo-oder Copolymere zur Herstellung der Schicht (a) und der Schicht (g) sind jeweils, gleich oder verschieden voneinander, Ethylen-Homo- und Copolymere und/oder Propylen-Homo- und Copolymere.

Besonders bevorzugt zur Herstellung der Schicht (a) sind Ethylen-Homo- und/oder Copolymere, ganz besonders bevorzugt LDPE und/oder LLDPE, und insbesondere eine Mischung aus wenigstens einem Ethylen-Homopolymeren niederer Dichte (LDPE) und wenigstens einem linearen Polyethylen niederer Dichte (LLDPE).

Besonders bevorzugt zur Herstellung der Schicht (g) sind Polypropylen-Homo- und/oder Copolymere, insbesondere Propylen-Copolymere.

Zur Herstellung der Schicht (a) und der Schicht (g) der erfindungsgemäßen Mehrschichtfolie können auch jeweils, gleich oder verschieden voneinander, Cyclo-Olefin-Copolymere (COC), vorzugsweise im Gemisch mit einem thermoplastischen Olefin-Homo-oder Copolymeren von α,β-ungesättigten Olefinen mit 2-10 Kohlenstoffatomen, eingesetzt werden. Unter dem Begriff "Cyclo-Olefin-Copolymer" bzw. "COC" wird im Sinne der vorliegenden Erfindung ein amorphes Copolymer verstanden, welches durch Copolymerisation von cyclischen (C₆-C₁₂)-Olefin-Monomeren, vorzugsweise Norbornen oder Tetracyclododecen, mit einem (C₂-C₄)-Olefin wie Ethylen hergestellt wird.

In einer besonderen Ausführungsform ist das Cycloolefin-Copolymeres ein (C₆-C₁₂)-Cycloolefin-(C₂-C₄)-Olefin-Copolymeres, vorzugsweise ein Norbornen/Ethylen-Copolymeres oder ein Tetracyclododecen/Ethylen-Copolymeres, besonders bevorzugt ein Norbornen/Ethylen-Copolymeres.

Vorzugsweise beträgt der Anteil der von wenigstens einem Cycloolefin abgeleiteten Struktureinheiten im Cycloolefin-Copolymeren mindestens 50 Gew.%, besonders bevorzugt mindestens 70 Gew.%, bezogen auf das Gesamtgewicht des Cycloolefin-Copolymeren.

Besonders bevorzugt sind Gemische aus Cyclo-Olefin-Copolymeren (COC) und thermoplastischen Olefin-Homo-oder Copolymeren von α,β-ungesättigten Olefinen mit 2-10 Kohlenstoffatomen, in denen der Anteil der Cycloolefin-Copolymer Komponente höchstens 50 Gew.%, bevorzugt höchstens 40 Gew.-%, und besonders bevorzugt 20-35 Gew.% beträgt.

Die Schicht (a) ist vorzugsweise siegelfähig, besonders bevorzugt heißsiegelfähig.

Die erfindungsgemäße Mehrschichtfolie weist eine Haftvermittlerschicht (b) auf, die gegebenenfalls mehrlagig, vorzugsweise zweilagig sein kann und nicht peelbar, insbesondere nicht durch einen Kohäsionspeel trennbar, ist.

Insgesamt weist die erfindungsgemäße Mehrschichtfolie wenigstens drei Haftvermittlerschichten (b), (f) und (h) auf, die gegebenenfalls jeweils, gleich oder verschieden voneinander, mehrlagig, vorzugsweise zweilagig sein können und im Sinne der Erfindung nicht peelbar sind.

Als Haftvermittler können übliche Haftvermittler eingesetzt werden. Vorzugsweise bestehen die Haftvermittlerschicht (b) und die Haftvermittlerschichten (f) und (h) jeweils, gleich oder verschieden voneinander, aus wenigstens einem modifizierten thermoplastischen Polymer, vorzugsweise aus wenigstens einem modifizierten Polyolefin-Homo- oder Copolymeren, besonders bevorzugt aus wenigstens einem modifizierten Propylen-Homo- oder Copolymeren, welches mit wenigstens einer organischen Säure oder wenigstens einem organischen Säureanhydrid, vorzugsweise mit Maleinsäureanhydrid modifiziert ist.

Die Haftvermittlerschichten (b), (f) und (h) können gleich oder verschieden sein.

In einer bevorzugten Ausführungsform der erfindungsgemäßen Mehrschichtfolie weisen die Haftvermittlerschichten (b) und die Haftvermittlerschichten (f) und (h) einen identischen Schichtaufbau, vorzugsweise eine identische Schichtdicke und/oder eine identische Zusammensetzung der Polymer-Komponente(n) auf.

In einer weiteren bevorzugten Ausführungsform der erfindungsgemäßen Mehrschichtfolie ist wenigstens eine der Haftvermittlerschichten (b) und der Haftvermittlerschichten (f) und (h) mehrlagig, vorzugsweise zweilagig. Die zwei oder mehr Lagen der mehrlagigen Haftvermittlerschicht(en) können jeweils, gleich oder verschieden, aus den genannten modifizierten thermoplastischen Polymeren aufgebaut und im Sinne der Erfindung nicht peelbar sein.

Die erfindungsgemäße Mehrschichtfolie enthält wenigstens eine gegebenenfalls mehrlagige Schicht (c), eine gegebenenfalls mehrlagige Schicht (e) und eine Schicht (i), die jeweils, gleich oder verschieden voneinander, aufgebaut sind aus wenigstens einem Homo- und/oder Copolyamid, wobei die Schicht (i) eine Außenschicht ist.

Zur Herstellung der Schichten (c), (e) und (i) eignen sich Homo- und/oder Copolyamide ausgewählt aus der Gruppe der thermoplastischen aliphatischen, teilaromatischen oder aromatischen Homo- oder Copolyamide.

Diese Homo- oder Copolyamide können aus aliphatischen Diaminen mit 2-10 Kohlenstoffatomen, insbesondere Hexamethylendiamin, und/oder aromatischen Diaminen mit 6-10 Kohlenstoffatomen, insbesondere p-Phenylendiamin, und aus Dicarbonsäuren wie aliphatischen oder aromatischen Dicarbonsäuren mit 6-14 Kohlenstoffatomen, wie z.B. Adipinsäure, Terephthalsäure oder Isophthalsäure hergestellt werden. Weiterhin können Homo- oder Copolyamide aus einem oder mehreren Lactamen mit 4-10 Kohlenstoffatomen, wie z.B. ε-Caprolactam, hergestellt werden. Copolyamide können auch aus den genannten aliphatischen und/oder aromatischen Diaminen, Dicarbonsäuren und Lactamen hergestellt werden, z.B. aus Hexamethylendiamin, Adipinsäure und ε-Caprolactam (PA 6/66). Besonders bevorzugte Polyamide sind PA 6, PA 12, PA 66, PA 6I, PA 6T oder entsprechende Co-Polymere aus wenigstens zwei der genannten Struktureinheiten, wie beispielsweise PA 6/66, oder Mischungen aus wenigstens zwei der genannten Polyamide.

Die Schichten (c), (e) und (i) können gleich oder verschieden sein.

In einer bevorzugten Ausführungsform der erfindungsgemäßen Mehrschichtfolie weisen die Schichten (c) und (e) einen identischen Schichtaufbau, vorzugsweise eine identische Schichtdicke und/oder identische Polyamid-Komponenten und/oder eine identische Zusammensetzung auf.

Besonders bevorzugte Homo- oder Copolyamide zur Herstellung der Schichten (c) und (e) sind teilaromatische, amorphe oder teilkristalline Copolyamide, welche gegebenenfalls im Gemisch mit wenigstens einem Homopolyamid und/oder wenigstens einem weiteren Copolyamid vorliegen können. Diese teilaromatischen, amorphen oder teilkristallinen Copolyamide werden vorzugsweise aus aliphatischen Diaminen mit 2-10 Kohlenstoffatomen, insbesondere Hexamethylendiamin, und aromatischen Dicarbonsäuren mit 6-14 Kohlenstoffatomen, wie z.B. Terephthalsäure oder Isophthalsäure, und/oder aus aromatischen Diaminen mit 6-10 Kohlenstoffatomen, insbesondere p-Phenylendiamin oder m-Xylendiamin, und aliphatischen Dicarbonsäuren mit 6-14 Kohlenstoffatomen, wie z.B. Adipinsäure, hergestellt. Ganz besonders bevorzugte Copolyamide zur Herstellung der Schichten (c) und (e) sind beispielsweise PA 6I/6T (aus den Monomeren Hexamethylendiamin, Terephthal- und Isophthalsäure) und MXD6/MXDI (aus den Monomeren m-Xylendiamin, Adipinsäure und Isophthalsäure).

In einer weiteren bevorzugten Ausführungsform der erfindungsgemäßen Mehrschichtfolie ist wenigstens eine der Schichten (c) und (e) mehrlagig, vorzugsweise zwei-, drei-, vier-, oder fünflagig. Die zwei, drei, vier, fünf oder mehr Lagen der mehrlagigen Schichten (c) und/oder (e) können jeweils, gleich oder verschieden, aus den genannten Homo- oder Copolyamiden aufgebaut sein.

Die erfindungsgemäße Mehrschichtfolie weist wenigstens eine innenliegende, an die Schichten (c) und (e) angrenzende Gasbarriereschicht (d) auf, die sich zumindest in der Zusammensetzung der Polymerkomponente(n) von den Schichten (c) und (e) unterscheidet.

Die gegebenenfalls mehrlagige Gasbarriereschicht (d) ist vorzugsweise aus wenigstens einem Ethylen-Vinylalkohol-Copolymeren, wenigstens einem Polyvinylalkohol, wenigstens einem Polyvinylidenchlorid, wenigstens einem Homo-oder Copolyamid, oder einer Mischung aus mindestens zwei dieser Polymeren aufgebaut.

Sofern die Gasbarriereschicht (d) aus wenigstens einem Ethylen-Vinylalkohol-Copolymeren (EVOH) aufgebaut ist, so wurde dieses bevorzugt durch im wesentlichen vollständige Hydrolyse von einem entsprechenden, Ethylen-haltigen Polyvinylacetat (EVAc) erhalten. Diese vollverseiften ethylenhaltige Polyvinylacetate weisen einen Verseifungsgrad ≥ 98 % und einen Ethylen-Anteil von 0,01-80 mol-%, vorzugsweise von 1-50 mol-% auf.

Der Gehalt der Ethylen-Komponente in dem Ethylen-Vinylalkohol-Copolymeren beträgt vorzugsweise höchstens 44 mol%, besonders bevorzugt höchstens 35 mol%, und ganz besonders bevorzugt 20 - 32 mol%.

Sofern die Gasbarriereschicht (d) aus wenigstens einem Polyvinylalkohol (PVOH) aufgebaut ist, so wurde dieser vorzugsweise durch im wesentlichen vollständige Hydrolyse von einem Polyvinylacetat (PVAc) gewonnen und weist als vollverseiftes Polyvinylacetat einen Verseifungsgrad ≥ 98 % auf.

Bevorzugte Homo- oder Copolyamide zur Herstellung der Gasbarriereschicht (d) sind die bereits genannten teilaromatischen, amorphen oder teilkristallinen Copolyamide, welche gegebenenfalls im Gemisch mit wenigstens einem Homopolyamid und/oder wenigstens einem weiteren Copolyamid vorliegen können.

In einer besonders bevorzugten Ausführungsform der erfindungsgemäßen Mehrschichtfolie basiert die Gasbarriereschicht (d) auf wenigstens einem Ethylen-Vinylalkohol-Copolymeren, wenigstens einem amorphen Polyvinylalkohol und/oder wenigstens einem teilaromatischen, amorphen Copolyamid oder teilaromatischen, teilkristallinen Copolyamid; insbesondere auf wenigstens einem Ethylen-Vinylalkohol-Copolymeren.

Ein bevorzugter amorpher Polyvinylalkohol ist unter dem Namen Nichigo G-Polymer^{®} (Nippon Gohsei, Japan) kommerziell erhältlich.

In einer weiteren bevorzugten Ausführungsform der erfindungsgemäßen Mehrschichtfolie ist die Gasbarriereschicht (d) mehrlagig, vorzugsweise zweilagig. Die zwei oder mehr Lagen der mehrlagigen Gasbarriereschicht (d) können jeweils, gleich oder verschieden, aus den genannten Polymer-Komponenten aufgebaut sein. In einer bevorzugten Ausführungsform der erfindungsgemäßen Mehrschichtfolie dient die Gasbarriereschicht (d) als eine Luft-, Helium-, Sauerstoff- und/oder Wasserdampfbarriereschicht.

Vorzugsweise beträgt die Heliumdurchlässigkeit der erfindungsgemäßen Mehrschichtfolie höchstens 3000 cm³/(m²·24h·bar), besonders bevorzugt höchstens 1500 cm³/(m²·24h·bar) und ganz besonders bevorzugt höchstens 1000 cm³/(m²· 24h·bar), bestimmt nach DIN 53380-2 bei 23°C und 0% Luftfeuchtigkeit. Vorzugsweise beträgt die Sauerstoffdurchlässigkeit der erfindungsgemäßen Mehrschichtfolie höchstens 8 cm³/(m²·24h·bar), besonders bevorzugt höchstens 5 cm³/(m²·24h·bar) und ganz besonders bevorzugt höchstens 2 cm³/(m²·24h·bar), bestimmt nach DIN 53380-2 bei 23°C und 0% Luftfeuchtigkeit.

Vorzugsweise beträgt die Stickstoffdurchlässigkeit der erfindungsgemäßen Mehrschichtfolie höchstens 8 cm³/(m²·24h·bar), besonders bevorzugt höchstens 5 cm³/(m²·24h·bar) und ganz besonders bevorzugt höchstens 2 cm³/(m²·24h·bar), bestimmt nach DIN 53380-2 bei 23°C und 0% Luftfeuchtigkeit.

In einer bevorzugten Ausführungsform liegen die Schichten (a)-(e) und (i), vorzugsweise (a)-(i), in der angegebenen Reihenfolge vor. Zusätzliche Schichten können gegebenenfalls jeweils zwischen den Schichten (a) und (b), (b) und (c), (e) und (f), (f) und (g), (g) und (h) und/oder (h) und (i) vorhanden sein, vorzugsweise in der Reihenfolge (a), (j), (b), (c), (d), (e), (f), (k), (g), (h) und (i). Soweit die zusätzlichen Schichten Haftvermittlerschichten sind, sind sie im Sinne der Erfindung nicht peelbar.

In einer weiteren bevorzugten Ausführungsform enthält die erfindungsgemäße Mehrschichtfolie ferner wenigstens eine innenliegende, vorzugsweise an die Schicht (a) angrenzende Schicht (j) und/oder eine innenliegende, vorzugsweise zwischen den Schichten (f) und (g) liegende Schicht (k), vorzugsweise jeweils, gleich oder verschieden voneinander, aufgebaut aus wenigstens einem thermoplastischen Olefin-Homo- oder Copolymeren oder einem Haftvermittler.

Vorzugsweise weist die Schicht (j) eine andere Polymerzusammensetzung auf als die Schicht (a). Vorzugsweise weist die Schicht (j) einen höheren Erweichungspunkt auf als die Schicht (a).

In einer bevorzugten Ausführungsform der erfindungsgemäßen, bis zu elfschichtigen Mehrschichtfolie basiert die Schicht (j) und/oder die Schicht (k), soweit vorhanden, jeweils, gleich oder verschieden voneinander, auf einem Haftvermittler, vorzugsweise auf wenigstens einem modifizierten thermoplastischen Polymeren. In dieser bevorzugten Ausführungsform bilden die Haftvermittlerschicht (b) und die Schicht (j) jeweils eine Lage einer mehrlagigen Haftvermittlerschicht (b) und/oder die Haftvermittlerschicht (f) und die Schicht (k) bilden jeweils eine Lage einer mehrlagigen Haftvermittlerschicht (f).

In einer weiteren bevorzugten Ausführungsform der erfindungsgemäßen Mehrschichtfolie basiert die Schicht (j) auf wenigstens einem Ethylen-Homo- oder Copolymeren, besonders bevorzugt auf wenigstens einem LDPE und/oder LLDPE, und insbesondere auf wenigstens einem linearen Polyethylen niederer Dichte (LLDPE).

In einer weiteren bevorzugten Ausführungsform der erfindungsgemäßen Mehrschichtfolie basiert die Schicht (k) auf wenigstens einem Ethylen-Homo- oder Copolymeren und/oder wenigstens einem Propylen-Homo- oder Copolymeren, besonders bevorzugt auf wenigstens einem Propylen-Copolymeren.

In einer bevorzugten Ausführungsform weist die Mehrschichtfolie einen wenigstens zehnschichtigen oder elfschichtigen Schichtaufbau auf. In dieser Ausführungsform besteht die Mehrschichtfolie vorzugsweise aus den Schichten (a)-(i), (j) und/oder (k), besonders bevorzugt in der Reihenfolge (a), (j) - soweit vorhanden-, (b), (c), (d), (e), (f), (k) - soweit vorhanden-, (g), (h), und (i).

In einer anderen bevorzugten Ausführungsform ist wenigstens eine der Schichten (b)-(e) mehrlagig.

In einer bevorzugten Ausführungsform weist die Mehrschichtfolie die Schichten (a), (b), (c), (d), (e) und (i) auf, wobei die Schichten (c) und (e) jeweils mehrlagig sind. Beispielsweise kann die Schicht (c) zweilagig und die Schicht (e) fünflagig vorliegen. In einer anderen bevorzugten Ausführungsform weist die Mehrschichtfolie die Schichten (a), (b), (c), (d), (e) und (i) auf, wobei die Haftvermittlerschicht (b) und die Schicht (e) jeweils mehrlagig sind. Beispielsweise kann die Haftvermittlerschicht (b) zweilagig und die Schicht (e) fünflagig vorliegen.

In einer anderen bevorzugten Ausführungsform enthält die erfindungsgemäße Mehrschichtfolie mit den Schichten (a) - (e) und (i) wenigstens eine innenliegende, vorzugsweise an die Schicht (e) angrenzende, gegebenenfalls mehrlagige, vorzugsweise zweilagige Gasbarriereschicht (I) aufgebaut aus auf wenigstens einem Ethylen-Vinylalkohol-Copolymeren, wenigstens einem amorphen Polyvinylalkohol und/oder wenigstens einem teilaromatischen, amorphen Copolyamid oder teilaromatischen, teilkristallinen Copolyamid; insbesondere auf wenigstens einem Ethylen-Vinylalkohol-Copolymeren, und ggf. ferner eine an die Gasbarriereschicht (I) und die Schicht (i) angrenzende, gegebenenfalls mehrlagige Schicht (m) aufgebaut aus wenigstens einem Homo- und/oder Copolyamid.

Unabhängig von der Anzahl ihrer Schichten beträgt die Gesamtdicke der Mehrschichtfolie vorzugsweise höchstens 30 µm, besonders bevorzugt höchstens 28 µm.

Vorzugsweise weisen die äußere Schicht (a) und die gegebenenfalls vorhandene Schicht (j), soweit diese keine Haftvermittlerschicht ist, zusammen eine Schichtdicke von mindestens 2 µm, besonders bevorzugt von 3 bis 6 µm auf.

Die Haftvermittlerschichten (b), die Haftvermittlerschichten (f) und (h), die gegebenenfalls vorhandene Schicht (k), soweit diese eine Haftvermittlerschicht ist, und die gegebenenfalls vorhandene Schicht (j), soweit diese eine Haftvermittlerschicht ist, der erfindungsgemäßen Mehrschichtfolie weisen vorzugsweise jeweils unabhängig voneinander eine Schichtdicke von 0,5 µm bis 4 µm, besonders bevorzugt von 0,5 µm bis 2,5 µm, auf.

Die Schichten (c) und (e) weisen vorzugsweise jeweils unabhängig voneinander eine Schichtdicke von 2 µm bis 7 µm, besonders bevorzugt von 2 µm bis 5 µm, auf.

Die Gasbarriereschicht (d) weist vorzugsweise eine Schichtdicke von höchstens 5 µm, besonders bevorzugt von höchstens 3 µm und ganz besonders bevorzugt von 0,75 µm bis 2,0 µm auf.

Vorzugsweise weisen die Schichten (g) und (k), soweit vorhanden und soweit (k) keine Haftvermittlerschicht ist, zusammen eine Schichtdicke von 3 µm bis 12 µm, besonders bevorzugt von 3,5 µm bis 8 µm, auf.

Die äußere Schicht (i) weist vorzugsweise eine Schichtdicke von 1 µm bis 8 µm, besonders bevorzugt von 1 µm bis 5 µm, auf.

Die Schichtdicke der Gasbarriereschicht (d) beträgt vorzugsweise höchstens 15%, besonders bevorzugt höchstens 12%, ganz besonders bevorzugt höchstens 10%, bezogen auf die Gesamtdicke der Mehrschichtfolie.

In einer bevorzugten Ausführungsform beträgt die Schichtdicke der Schichten (g) und (k), soweit vorhanden und soweit (k) keine Haftvermittlerschicht ist, zusammen mindestens 10%, besonders bevorzugt mindestens 15%, ganz besonders bevorzugt mindestens 18%, bezogen auf die Gesamtdicke der Mehrschichtfolie.

In einer bevorzugten Ausführungsform beträgt die Schichtdicke der Schicht (a), der Schicht (g), der gegebenenfalls vorhandenen Schicht (k), soweit diese keine Haftvermittlerschicht ist, und der gegebenenfalls vorhandenen Schicht (j), soweit diese keine Haftvermittlerschicht ist, zusammen mindestens 20%, besonders bevorzugt mindestens 30%, ganz besonders bevorzugt mindestens 35%, bezogen auf die Gesamtdicke der Mehrschichtfolie.

Die Schichten (a) bis (i) sowie die gegebenenfalls vorhandenen Schichten (j), (k), (I) und/oder (m) können, jeweils unabhängig voneinander, mit Additiven ausgewählt aus der Gruppe umfassend Antioxidantien, Antiblockmittel, Antifogmittel, Antistatika, antimikrobielle Wirkstoffe, Lichtschutzmittel, UV-Absorber, UV-Filter, Farbstoffe, Farbpigmente, Stabilisierungsmittel, vorzugsweise HitzeStabilisatoren, Prozess-Stabilisatoren und UV- und/oder Licht-Stabilisatoren, vorzugsweise basierend auf wenigstens einem sterisch gehinderten Amin (HALS), Prozesshilfsmittel, Flammschutzmittel, Nukleierungsmittel, Gleitmittel, optische Aufheller, Flexibilisierungsmittel, Siegelmittel, Weichmacher, Abstandshalter, Füllstoffe, Peel-Additive, Wachse, Benetzungsmittel, oberflächenaktive Verbindungen, vorzugsweise Tenside, und Dispergiermittel, dotiert sein, wobei Haftvermittlerschichten keine Peel-Additive enthalten. Dabei kann der Gehalt der vorstehend genannten Additive - soweit in einer Schicht vorhanden, jeweils 0,001-20 Gew.-%, vorzugsweise 0,01-10 Gew.-%, jeweils bezogen auf das Gesamtgewicht der einzelnen Schicht, betragen.

In einer bevorzugten Ausführungsform ist die erfindungsgemäße Mehrschichtfolie siegelfähig, vorzugsweise heißsiegelfähig, wobei vorzugsweise die Schicht (a) heißsiegelfähig ist.

In einer bevorzugten Ausführungsform ist die erfindungsgemäße Mehrschichtfolie transparent.

Die erfindungsgemäße Mehrschichtfolie kann mittels bekannten Druckverfahren bedruckt werden, vorzugsweise mittels eines Digitaldruck-Verfahrens, und/oder eingefärbt sein. Der Druck erfolgt vorzugsweise auf der Schicht (i). Vorzugsweise wird zur Einfärbung wenigstens eine Schicht, vorzugsweise die Schicht (g), die gegebenenfalls vorhandene Schicht (j) und/oder die gegebenenfalls vorhandene Schicht (k), mit wenigstens einem Farbmittel, vorzugsweise mit wenigstens einem Farbstoff und/oder Farbpigment, als Additiv ausgestattet.

In einer bevorzugten Ausführungsform können die Schlichten (a) bis (i) sowie die gegebenenfalls vorhandenen Schichten (j), (k), (l) und/oder (m) der erfindungsgemäßen Mehrschichtfolie als gesamte mehrschichtige Folie, vorzugsweise in Form einer Schlauchfolie, produziert und verarbeitet werden. Vorzugsweise ist die erfindungsgemäße Mehrschichtfolie insgesamt nach dem Blasfolien-Coextrusionsverfahren, vorzugsweise nach dem Triple-Bubble-Coextrusionsverfahren herstellbar.

Diese Herstellungsverfahren und entsprechenden Parameter sind dem Fachmann allgemein bekannt. Die Herstellung von Mehrschichtfolien mit Hilfe des Triple-Bubble-Coextrusionsverfahren wird beispielsweise in James D. Stobie, "Producing coextruded high barrier heat-shrinkable packaging films", PAPER, FILM & FOIL CONVERTER, [Online] 1. Oktober 2003 beschrieben.

Vorzugsweise wird dabei der Folienschlauch biaxial in Längs- und Querrichtung jeweils in einem Reckverhältnis von mindestens 1:1,5, besonders bevorzugt von mindestens 1:2, ganz besonders bevorzugt von 1:2 bis 1:3, gereckt. Vorzugsweise wird die Mehrschichtfolie anschließend zur Einstellung der Schrumpfeigenschaften einer Wärmebehandlung unterzogen, so dass ein Schrumpfverhalten von ≤ 10% bei 90 °C, bestimmt als Maßänderung nach DIN 53377, erhalten wird.

Die erfindungsgemäße Mehrschichtfolie zeichnet sich dadurch aus, dass sie eine ausgezeichnete Dehnbarkeit aufweist und ferner über eine geringe Gasdurchlässigkeit, insbesondere Helium-, Sauerstoff- und Luftdurchlässigkeit, verfügt. Infolgedessen kann die erfindungsmäße Mehrschichtfolie gedehnt werden, ohne dass ihre Barrierewirkung gegenüber Gasen beeinträchtigt wird.

Ferner zeichnet sich die erfindungsgemäße Mehrschichtfolie dadurch aus, dass sie nur geringe Schrumpfeigenschaften aufweist. Infolgedessen können mehrere Segmente der erfindungsgemäßen Mehrschichtfolie über eine Siegelnaht verbunden werden, ohne dass der Siegelungsprozess durch ein Schrumpfen der Mehrschichtfolie behindert wird.

Die erfindungsgemäße Mehrschichtfolie zeichnet sich ferner dadurch aus, dass sie eine hohe Durchstoßfestigkeit aufweist und über keine elektrische Leitfähigkeit verfügt.

Dadurch eignet sich die erfindungsgemäße Mehrschichtfolie vorzugsweise zur Herstellung eines Auftriebskörpers.

Ein weiterer Gegenstand der Erfindung ist daher die Verwendung einer erfindungsgemäßen Mehrschichtfolie zur Herstellung eines Auftriebskörpers.

Ein weiterer Gegenstand der Erfindung ist daher ein Auftriebskörper zumindest teilweise gebildet aus einer erfindungsgemäßen Mehrschichtfolie.

Unter einem "Auftriebskörper" im Sinne der Erfindung wird eine im Wesentlichen gasdichte Hülle verstanden, die mit einem Traggas gefüllt ist.

Unter dem Begriff "Traggas" wird im Sinne der Erfindung ein Gas oder ein Gasgemisch verstanden, welches eine geringere Dichte als das den Auftriebskörper umgebende Medium aufweist. Das den Auftriebskörper umgebende Medium ist Wasser im Falle eines Schwimmkörpers, und Luft im Falle eines Fluggeräts oder eines Ballons.

In einer bevorzugten Ausführungsform besteht die Hülle des Auftriebskörpers aus zumindest zwei über eine Siegelnaht verbundenen, vorzugsweise identisch gestalteten Segmenten der erfindungsgemäßen Mehrschichtfolie und weist ggf. einen Gaszuführungskanal auf. Die Siegelnaht befindet sich vorzugsweise am äußeren Hüllenrand der Segmente und weist im Bereich des Gaszuführungskanals - soweit vorhanden - eine Aussparung auf, welche mit einer Gaszuführungs- und/oder Gasauslasseinrichtung, beispielsweise in Form eines Ventils ausgestattet sein kann. Vorzugsweise sind die Segmente der erfindungsgemäßen Mehrschichtfolie in der Hülle derart angeordnet, dass die Schicht (i) mit dem den Auftriebskörper umgebenden Medium in Kontakt steht und die Schicht (a) nach innen gerichtet ist und mit dem Traggas in Kontakt steht.

Zur Herstellung des erfindungsgemäßen Auftriebskörpers werden wenigstens zwei, vorzugsweise identisch gestaltete Segmente der vorstehend beschriebenen Mehrschichtfolie mittels einer Versiegelung jeweils im Bereich des äußersten Rands der Schicht (a) zu der Hülle des Auftriebskörpers geformt, der äußere Rand wird ggf. bis zur Siegelnaht abgeschnitten, und vorzugsweise wird die Hülle ferner mit einer Gaszuführungs- und/oder Gasauslasseinrichtung versehen und mit einem Traggas gefüllt.

Vorzugsweise ist der Auftriebskörper ein Schwimmkörper oder zumindest Bestandteil eines Fluggeräts.

In einer bevorzugten Ausführungsform der erfindungsgemäß verwendeten Mehrschichtfolie bzw. des erfindungsgemäßen Auftriebskörpers, ist der Auftriebskörper zumindest Bestandteil eines Fluggerätes, vorzugsweise eines Luftschiffes als Heißluftballon, Freiballons, Fesselballons, Pilotballons oder Forschungsballons.

Vorzugsweise ist das Traggas des Fluggeräts Helium, Wasserstoff oder ein Helium-Luft-Gemisch.

In einer besonders bevorzugten Ausführungsform der erfindungsgemäß verwendeten Mehrschichtfolie bzw. des erfindungsgemäßen Auftriebskörpers ist der Auftriebskörper ein Ballon.

Vorzugsweise enthält der Ballon ein Gas ausgewählt aus der Gruppe bestehend aus Helium, einem Helium-Stickstoff-Gemisch, Wasserstoff und einem Helium-/Luft-Gemisch als Traggas.

In einer bevorzugten Ausführungsform besteht die Hülle des Ballons aus zumindest zwei über eine Siegelnaht verbundenen, vorzugsweise identisch gestalteten Segmenten der erfindungsgemäßen Mehrschichtfolie und weist einen Gaszuführungskanal sowie ggf. ein Gasein- und -auslassventil auf. Die Siegelnaht befindet sich vorzugsweise am Rand der beiden Segmente und weist im Bereich des Gaszuführungskanals eine Aussparung auf, welche vorzugsweise mit einem Gaseinlass- und Gasauslassventil ausgestattet ist. Der Mantel des Gaseinlass- und Gasauslassventils wird von den gesiegelten Segmenten gasdicht umschlossen. Vorzugsweise sind die Segmente der erfindungsgemäßen Mehrschichtfolie als Hülle des Ballons derart angeordnet, dass die Schicht (i) mit dem den Ballon umgebenden Medium in Kontakt steht und die Schicht (a) in den Innenraum des Ballons gerichtet ist und mit dem Traggas in Kontakt steht.

Zur Herstellung des erfindungsgemäßen Ballons werden wenigstens zwei, vorzugsweise identisch gestaltete Segmente der vorstehend beschriebenen Mehrschichtfolie ausgestanzt und mittels einer Versiegelung jeweils im Bereich des äußersten Rands der Schicht (a) zu einem Ballonkörper geformt, der einen Gaszuführungskanal sowie ggf. ein Gas- und -auslassventil aufweist. Nach Befüllung mit einem Gas, vorzugsweise Helium oder ein Helium-Luft-Gemisch, wird der Gaszuführungskanal, vorzugsweise durch Verknoten des Mantels des Gasführungskanals oder durch Verschließen des ggf. vorhandenen Gasventils gasdicht verschlossen.

Der aufgeblasene Ballon kann eine beliebige Form haben. So kann er beispielsweise eine ellipsoide, kugelförmige, schlauchförmige, herzförmige Form, die Form eines Tieres oder einer Comicfigur oder eine beliebige individuelle Form aufweisen und ggf. mit Motiven, Fotos, Glückwünschen und/oder beliebigen Texten bedruckt sein.

Vorzugsweise ist der Ballon über einen Zeitraum von mindestens 3 Tagen, besonders bevorzugt mindestens 5 Tagen, insbesondere mindestens 7 Tagen bei Atmosphärendruck (Umgebungsdruck) flugfähig.

In einer anderen bevorzugten Ausführungsform der erfindungsgemäß verwendeten Mehrschichtfolie bzw. des erfindungsgemäßen Auftriebskörpers ist der

Auftriebskörper ein Schwimmkörper, der vorzugsweise zumindest Bestandteil einer Boje, Schwimmweste oder Schwimmplattform, eines Steges oder eines Bootes, vorzugsweise eines Pontonbootes, oder eines Luftkissenschiffes, ist.

Vorzugsweise ist der Schwimmkörper mit Luft gefüllt.

Der erfindungsgemäße Auftriebskörper zeichnet sich gegenüber üblichen Auftriebskörpern dadurch aus, dass er über eine geringe Gasdurchlässigkeit, insbesondere Helium- und Luftdurchlässigkeit, verfügt, so dass das von der Hülle eingeschlossene Traggas nur sehr langsam - wenn überhaupt - entweichen kann.

Der erfindungsgemäße Auftriebskörper zeichnet sich gegenüber üblichen Auftriebskörpern außerdem dadurch aus, dass seine Hülle ein geringes Flächengewicht aufweist und über gute mechanische Eigenschaften verfügt.

Weiterhin zeichnet sich der erfindungsgemäße Auftriebskörper dadurch aus, dass seine Hülle über keine elektrische Leitfähigkeit verfügt.

Aufgrund seines geringen Flächengewichtes sowie der geringen Gasdurchlässigkeit seiner Hülle hat der erfindungsgemäße Auftriebskörper eine lange Lebensdauer.

Der erfindungsgemäße Auftriebskörper zeichnet sich ferner dadurch aus, dass er eine hohe Durchstoßfestigkeit aufweist.

### Bestimmung der Durchstoßfestigkeit

Die Durchstoßfestigkeit der erfindungsgemäßen Mehrschichtfolie wird nach DIN 53373 im Normklima 23°C bei 50% rel. Feuchte bestimmt und ist in [N] angegeben.

### Bestimmung der Helium- bzw. Sauerstoffdurchlässigkeit

Die Helium- bzw. Sauerstoffdurchlässigkeit der erfindungsgemäßen Mehrschichtfolie wird nach DIN 53380-2 bei 23°C und 0% Luftfeuchtigkeit bestimmt und ist in cm³/(m²·24h·bar) angegeben.

### Beispiele:

Die nachfolgenden Beispiele und Vergleichsbeispiele dienen der Erläuterung der Erfindung, sind jedoch nicht einschränkend auszulegen.

### I. Chemische Charakterisierung der eingesetzten Rohstoffe:

- LLDPE:: Hersteller: Dow Chemicals
Dichte: 0,92 g/cm³
Schmelzevolumenrate: 1,1 g/10 min (190°C/2,16kg)
Co-Monomer: 1-Octen
- LDPE:: Hersteller: LyondellBasell Industries
Dichte: 0,924 g/cm³
Schmelzevolumenrate: 1,9 g/10 min (190°C/2,16 kg)
- Polypropylen-Copolymer:: Hersteller: LyondellBasell Industries
Dichte: 0,90 g/cm³
Schmelzevolumenrate: 5,5 g/10 min (230°C/2,16kg)
Co-Monomer: Ethylen
- Haftvermittler:: Hersteller: Mitsui Chemicals
Dichte: 0,90 g/cm³
Schmelzevolumenrate: 2,5 g/10 min (190°C/2,16kg)
Polyethylen, modifiziert mit Maleinsäureanhydrid
- Polyamid:: Hersteller: Ems-Chemie AG
Dichte: 1,14 g/cm³
Schmelzevolumenrate: 25 cm³/10 min (275°C/5kg) PA6
- Amorphes PA:: Hersteller: Ems-Chemie AG
Dichte: 1,18 g/cm³
Schmelzevolumenrate: 25 cm³/10 min (275°C/5kg) PA6I/6T
- EVOH:: Hersteller: Nippon Gohsei Europe GmbH
Dichte: 1,21 g/cm³
Schmelzevolumenrate: 3,8 g/10 min (210°C/2,16kg)
Ethylen-Anteil: 29 Gew.-%

### II. Herstellung der erfindungsgemäßen Mehrschichtfolie:

Die erfindungsgemäße Mehrschichtfolie besteht aus 10 Schichten, von denen eine zweilagig ist, und weist eine Gesamtschichtdicke von 20 µm und ein Flächengewicht von 20,1 g/m² auf. Die einzelnen Schichten der erfindungsgemäßen Mehrschichtfolie grenzen jeweils in der Reihenfolge unmittelbar aneinander an, in der sie nachstehend aufgeführt sind. Die Mehrschichtfolie wurde durch Blasfolien-Coextrusion nach dem Triple-Bubble-Verfahren mit einem Aufblas- bzw. Reckverhältnis von 3,0 in Maschinenrichtung und 2,4 in Querrichtung hergestellt. Die erhaltene Folie weist sowohl in Maschinen- als auch in Querrichtung durchschnittliche Schrumpfwerte von 5% auf.

### III. Herstellung der Vergleichsfolie

Die Vergleichsfolie besteht aus 5 Schichten und weist eine Gesamtschichtdicke von 32 µm und ein Flächengewicht von 34,8 g/m² auf. Die einzelnen Schichten grenzen in der Reihenfolge unmittelbar aneinander an, in der sie nachstehend aufgeführt sind. Die Mehrschichtfolie wurde durch Coextrusion hergestellt und weist Schrumpfwerte von etwa 30% in beiden Richtungen auf.

### IV. Beispiel und Vergleichsbeispiel

Alle nachfolgenden %-Angaben sind jeweils Gew.-%.

### IV.1 Beispiel B1

Schicht (a) (3,2 µm): 70% LDPE + 30% LLDPE
Schicht (j) (0,6 µm): LLDPE
Schicht (b) (1,6 µm): Haftvermittler
Schicht (c) (2,3 µm): Mischung aus 80% PA 6 und 20% amorphes Polyamid
Schicht (d) (2,0 µm): EVOH
Schicht (e) (2,3 µm): Mischung aus 80% PA 6 und 20% amorphes Polyamid
Schicht (f) (zweilagig: 0,8 µm/0,8 µm): Haftvermittler/Haftvermittler
Schicht (g) (4,0 µm): Polypropylen-Copolymer
Schicht (h) (1,2 µm): Haftvermittler
Schicht (i) (1,2 µm): Polyamid

Gesamtschichtdicke: 20 µm
Flächengewicht: 20,1 g/m²
Durchschnittliche Dichte: 1,01 g/cm³

### IV.2 Vergleichsbeispiel V1 (Qualatex)

Schicht (a) (10 µm; 17,3 g/m²): 40% LDPE + 60% LLDPE
Schicht (b): Haftvermittler
Schicht (d) (5 µm; 5,9 g/m²): EVOH, 24% Ethylen
Schicht (h): Haftvermittler
Schicht (i) (15 µm; 9,3 g/m²): Polyamid 6/66

Gesamtschichtdicke: 32 µm
Flächengewicht: 34,8 g/m²
Durchschnittliche Dichte: 1,087 g/cm³

### V. Bestimmung der Sauerstoff- und Heliumdurchlässigkeit sowie der Durchstoßfestigkeit

Für die Mehrschichtfolie des Beispiels **(B1)** sowie des Vergleichsbeispiels **(V1)** wurden jeweils nach den vorstehend beschriebenen Methoden die Sauerstoff- und Heliumdurchlässigkeit sowie die Durchstoßfestigkeit ermittelt.

Die Werte entsprechen jeweils dem Mittelwert aus 2 gemessenen Proben.

| Beispiel/ Vergleichsbeispiel | Heliumdurchlässigkeit bei 23°C/0% rel. Feuchte [cm³/(m²·24h·bar] | Sauerstoffdurchlässigkeit bei 23°C/0% rel. Feuchte [cm³/(m²·24h·bar] | Durchstoßfestigkeit [N] |
|---|---|---|---|
| **B1** | 655 | 1,46 | 156 |
| **V1** | 646 | 3,83 | 174 |

Überraschenderweise weist die Mehrschichtfolie des Beispiels **(B1)** trotz ihrer um über 35% geringeren Gesamtschichtdicke gegenüber der Mehrschichtfolie des Vergleichsbeispiels **(V1)** eine hervorragende Durchstoßfestigkeit und eine gute Barrierewirkung gegenüber Helium und Sauerstoff auf.

## Patentansprüche

1. Eine Metallschicht-freie, zur Herstellung von Auftriebskörpern geeignete Mehrschichtfolie mit einem Flächengewicht von ≤ 33 g/m² und einem wenigstens neunschichtigen Schichtaufbau umfassend
(a) eine Schicht (a) aufgebaut aus wenigstens einem thermoplastischen Olefin-Homo- oder Copolymeren als eine der Außenschichten,
(b) eine nicht peelbare, gegebenenfalls mehrlagige Haftvermittlerschicht (b),
(c) eine Schicht (c) aufgebaut aus wenigstens einem Homo- und/oder Copolyamid,
(d) wenigstens eine innenliegende, an die Schicht (c) angrenzende Gasbarriereschicht (d), die sich zumindest in der Zusammensetzung der Polymerkomponente(n) von den Schichten (c) und (e) unterscheidet;
(e) eine an die Gasbarriereschicht (d) angrenzende Schicht (e) aufgebaut aus wenigstens einem Homo- und/oder Copolyamid,
(f) eine nicht peelbare, gegebenenfalls mehrlagige Haftvermittlerschicht (f),
(g) wenigstens eine innenliegende Schicht (g) aufgebaut aus wenigstens einem thermoplastischen Olefin-Homo- oder Copolymeren,
(h) eine nicht peelbare, gegebenenfalls mehrlagige Haftvermittlerschicht (h),
(i) eine Schicht (i) aufgebaut aus wenigstens einem Homo- und/oder Copolyamid als eine der Außenschichten,
**dadurch gekennzeichnet, dass** die Mehrschichtfolie sowohl in Maschinenrichtung als auch quer zur Maschinenrichtung ein Schrumpfverhalten von ≤ 10 % bei 90°C, bestimmt als Maßänderung nach DIN 53377, aufweist, und die Mehrschichtfolie keine Metallfolie oder aufgedampfte Schicht aus einem Metall oder einer Metallverbindung aufweist.

2. Eine Mehrschichtfolie nach Anspruch 1, **dadurch gekennzeichnet, dass** die Mehrschichtfolie ein Flächengewicht von ≤ 31 g/m² aufweist.

3. Eine Mehrschichtfolie nach einem der Ansprüche 1 oder 2, **dadurch gekennzeichnet, dass** die Gesamtdicke der Mehrschichtfolie höchstens 30 µm und die durchschnittliche Dichte der Mehrschichtfolie höchstens 1,1 g/cm³ beträgt.

4. Eine Mehrschichtfolie nach einem der Ansprüche 1-3, **dadurch gekennzeichnet, dass** die Mehrschichtfolie sowohl in Maschinenrichtung als auch quer zur Maschinenrichtung ein Schrumpfverhalten von ≤ 7 %, vorzugsweise ≤ 5 % bei 90°C, bestimmt als Maßänderung nach DIN 53377, aufweist.

5. Eine Mehrschichtfolie nach einem der Ansprüche 1-4, **dadurch gekennzeichnet, dass** die Gasbarriereschicht (d) aus wenigstens einem Ethylen-Vinylalkohol-Copolymeren, wenigstens einem Polyvinylalkohol, wenigstens einem Polyvinylidenchlorid, wenigstens einem Homo- oder Copolyamid oder einer Mischung aus mindestens zwei dieser Polymere, besonders bevorzugt aus wenigstens einem Ethylen-Vinylalkohol-Copolymeren, aufgebaut ist.

6. Eine Mehrschichtfolie nach einem der Ansprüche 1-5, **dadurch gekennzeichnet, dass** die Durchstoßfestigkeit der Mehrschichtfolie mindestens 100 N, vorzugsweise 120 N, bestimmt nach bestimmt nach DIN 53373, beträgt.

7. Eine Mehrschichtfolie nach einem der Ansprüche 1-6, **dadurch gekennzeichnet, dass** die Heliumdurchlässigkeit der Mehrschichtfolie höchstens 3000 cm³/(m²·24h·bar), vorzugsweise höchstens 1500 cm³/(m²·24h·bar), besonders bevorzugt höchstens 1000 cm³/(m²·24 h·bar), bestimmt nach DIN 53380-2 bei 23 °C und 0 % Luftfeuchtigkeit, beträgt.

8. Eine Mehrschichtfolie nach einem der Ansprüche 1-7, **dadurch gekennzeichnet, dass** die Sauerstoffdurchlässigkeit der Mehrschichtfolie höchstens 8 cm³/(m²·24 h·bar), vorzugsweise höchstens 5 cm³/(m²·24 h·bar), besonders bevorzugt höchstens 2 cm³/(m²·24 h·bar), bestimmt nach DIN 53380-2 bei 23°C und 0 % Luftfeuchtigkeit, beträgt.

9. Eine Mehrschichtfolie nach einem der Ansprüche 1-8, **dadurch gekennzeichnet, dass** die Schicht (a) aus wenigstens einem Ethylen-Homo- oder Copolymeren, vorzugsweise aus wenigstens einem Ethylen-Homopolymeren niedriger Dichte (LDPE) und/oder wenigstens einem linearen Polyethylen niedriger Dichte (LLDPE), aufgebaut ist.

10. Eine Mehrschichtfolie nach einem der Ansprüche 1-9, **dadurch gekennzeichnet, dass** die Schicht (g) aus wenigstens einem Ethylen-Homo- oder Copolymeren und/oder wenigstens einem Propylen-Homo- oder Copolymeren, vorzugsweise aus wenigstens einem Polypropylen-Copolymeren, aufgebaut ist.

11. Eine Mehrschichtfolie nach einem der Ansprüche 1-10, **dadurch gekennzeichnet, dass** die Schichten (a)-(i) in der angegebenen Reihenfolge vorliegen.

12. Eine Mehrschichtfolie nach einem der Ansprüche 1-11, **dadurch gekennzeichnet, dass** die Mehrschichtfolie ferner wenigstens eine innenliegende Schicht (j) und ggf. wenigstens eine weitere innenliegende Schicht (k), vorzugsweise jeweils, gleich oder verschieden voneinander, aufgebaut aus wenigstens einem thermoplastischen Olefin-Homo- oder Copolymeren oder als eine Lage der mehrlagigen Haftvermittlerschicht (b) und/oder der mehrlagigen Haftvermittlerschicht (f), aufweist.

13. Eine Mehrschichtfolie nach einem der Ansprüche 1-12, **dadurch gekennzeichnet, dass** die Mehrschichtfolie einen wenigstens zehnschichtigen Schichtaufbau aufweist.

14. Eine Mehrschichtfolie nach einem der Ansprüche 1-13, **dadurch gekennzeichnet, dass** die Mehrschichtfolie siegelfähig, bedruckt und/oder eingefärbt ist.

15. Eine Mehrschichtfolie nach einem der Ansprüche 1-14, **dadurch gekennzeichnet, dass** die Mehrschichtfolie zumindest teilweise transparent und ggf. eingefärbt ist.

16. Eine Mehrschichtfolie nach einem der Ansprüche 1-15, **dadurch gekennzeichnet, dass** die Mehrschichtfolie nach dem Blasfolien-Coextrusionsverfahren, vorzugsweise nach dem Triple-Bubble-Coextrusionsverfahren, herstellbar ist.

17. Ein Auftriebskörper zumindest teilweise gebildet aus einer Mehrschichtfolie nach einem der Ansprüche 1-16.

18. Ein Auftriebskörper nach Anspruch 17, **dadurch gekennzeichnet, dass** der Auftriebskörper zumindest Bestandteil eines Fluggerätes, vorzugsweise eines Luftschiffes als Heißluftballon, Freiballons, Fesselballons, Pilotballons oder Forschungsballons, ist.

19. Ein Auftriebskörper nach Anspruch 17, **dadurch gekennzeichnet, dass** der Auftriebskörper ein Schwimmkörper ist, der vorzugsweise Bestandteil einer Boje, Schwimmweste oder Schwimmplattform, eines Steges oder eines Bootes, vorzugsweise eines Pontonbootes, oder eines Luftkissenschiffes ist.

20. Ein Auftriebskörper nach Anspruch 17, **dadurch gekennzeichnet, dass** der Auftriebskörper ein Ballon ist, der als aufgeblasener Ballon eine beliebige Form, vorzugsweise eine ellipsoide, kugelförmige, schlauchförmige oder herzförmige Form, aufweisen und ggf. mit Motiven bedruckt sein kann.

## Claims

1. A metal layer-free multi-layer film suitable for the production of a buoyancy/lift body with a surface weight of ≤ 33 g/m² and an at least nine-layer structure, comprising:
(a) a layer (a) composed of at least one thermoplastic olefin homopolymer or copolymer as one of the outer layers,
(b) an adhesive layer (b), being non-peelable, if necessary multilayer
(c) a layer (c) composed of at least one homo and/or copolyamide,
(d) at least one internal gas barrier layer (d) which adjoins layer (c) and differs from layers (c) and (e) at least in the composition of the polymer component(s);
(e) a layer (e) adjoining the gas barrier layer (d) and composed of at least one homopolyamide and/or copolyamide;
(f) an adhesive layer (f), if necessary multilayer;
(g) at least one internal layer (g) composed of at least one thermoplastic olefin homopolymer or copolymer;
(h) an adhesive layer (h), being non-peelable, if necessary multilayer;
(i) a layer (i) composed of at least one homopolyamide and/or copolyamide as one of the outer layers;
**characterized in that**
the multi-layer film in machine direction as well as transverse to the machine direction at 90°C has a shrinkage behavior of < 10 %, determined as a change in dimensions in accordance with DIN 53377 and **in that** the multilayer film comprises no metal film nor a vapor-deposited layer form a metal or a metal compound.

2. A multi-layer film according to Claim 1, **characterized in that** the multi-layer film has a surface weight of ≤ 31 g/m².

3. Multi-layer film according to any one of the Claims 1 or 2, **characterized in that** the total thickness of the multi-layer film is 30 µm maximum and the average thickness of the multi-layer film is 1.1 g/cm³ maximum.

4. Multi-layer film according to any one of the Claims 1 to 3, **characterized in that** the multilayer-film the multi-layer film in machine direction as well as transverse to the machine direction at 90°C has a shrinkage behavior of < 7%, preferably of < 5 %, determined as a change in dimensions in accordance with DIN 53377.

5. Multi-layer film according to any one of the Claims 1 to 4, **characterized in that** the gas barrier layer (d) is composed of at least one of an ethylene vinyl alcohol copolymer, at least one of a polyvinyl alcohol, polyvinylidene chloride, at least one homopolyamide and/or copolyamide or a mix of at least two of said polymers, in particular of at least one ethylene vinyl alcohol copolymer.

6. Multi-layer film according to any one of the Claims 1 to 5, **characterized in that** the perforation resistance of the multi-layer film is at least 100 N, preferably 120 N, determined in accordance with DIN 533373.

7. Multi-layer film according to any one of the Claims 1 to 6, **characterized in that** the helium permeability of the multi-layer film is 3000 cm³ maximum (m² 24 h bar), preferably 1500 cm³ maximum (m² 24h bar) particularly preferred 1000 cm³ / (m² 24 h bar) maximum), determined in accordance with DIN 533380-2 at 23°C and 0 % air humidity.

8. Multi-layer film according to any one of the Claims 1 to 7, **characterized in that** the oxygen permeability of the multi-layer film is 8 cm³/ (m²·24 h·bar) maximum, preferably at least 5 cm³/(m² 24h bar), particularly preferred at least 2 cm³ /(m² 24h bar), determined in accordance with DIN 53380-2 at 23°C and 0% air humidity.

9. Multi-layer film according to any one of the Claims 1 to 8, **characterized in that** the layer (a) is composed of at least one of an ethylene homo- or copolymer, preferably of at least one low-density ethylene homopolymer (LDPE) and/or at least one low-density linear polyethylene (LLDPE).

10. Multi-layer film according to any one of the Claims 1 to 9, **characterized in that** the layer (g) is composed of at least one of an ethylene homo- or copolymer and at least one of a propylene homo or copolymer, preferably of at least one polypropylene copolymer.

11. Multi-layer film according to any one of the Claims 1 to 10, **characterized in that** the layers (a)-(i) are present in the indicated order.

12. Multi-layer film according to any one of the Claims 1 to 11, **characterized in that** the multi-layer film comprises at least one internal layer (j) and if necessary, at least one additional internal layer (k)preferably in each case, equal or different from one another, composed of at least one of a thermoplastic olefin homo or copolymer or as a layer of the multi-layer adhesive layer (b) and/or the multi-layer adhesive layer (f).

13. Multi-layer film according to any one of the Claims 1 to 12, **characterized in that** the multi-layer film has an at least ten-layer structure.

14. Multi-layer film according to any one of the Claims 1 to 12, **characterized in that** the multi-layer film is sealable, printed or dyed.

15. Multi-layer film according to any one of the Claims 1 to 14, **characterized in that** the multi-layer film is at least partially transparent and dyed, if necessary.

16. Multi-layer film according to any one of the Claims 1 to 15, **characterized in that** the multi-layer film can be produced according to the blow-co-extrusion film method, preferably according to the triple blow-co-extrusion method.

17. A buoyancy/lift body, at least partially composed of a multi-layer film according to any one of the Claims 1 to 16.

18. A buoyancy/lift body according to Claim 17, **characterized in that** the buoyancy/lift body is at least an integral part of an aircraft, preferably of an airship as a hot-air balloon, free balloon, captive balloon, pilot balloon or research balloon.

19. A buoyancy/lift body according to Claim 17, **characterized in that** the buoyancy/lift body is a floating body, which is preferably an integral part of a buoy, a life vest or a swimming platform, a walkway or a boat, preferably a pontoon boat or an air cushion ship.

20. A buoyancy/lift body according to Claim 17, **characterized in that** the buoyancy/lift body is a balloon, which may have a random shape when inflated, preferably an ellipsoid, spherical, hose-like, or heart-like shape and may be printed with motives, if necessary.

## Revendications

1. Une feuille multicouche dépourvue de couches métalliques qui est adaptée à la fabrication de corps de sustentation et dont le grammage est de ≤ 33 g/m² et qui est constituée d'une structure comptant au moins neuf couches :
(a) une couche (a) constituée d'au moins un copolymère ou homopolymère oléfine thermoplastiques formant une des couches extérieures,
(b) une couche d'agent adhésif (b) non-pelable présentant, le cas échéant, plusieurs épaisseurs,
(c) une couche (c) constituée d'au moins un homopolyamide et/ou copolyamide,
(d) au moins une couche barrière au gaz intérieure (d) adjacente à la couche (c), qui se distingue au moins par la composition du ou des composant(s) polymère(s) par les couches (c) et (e) ;
(e) une couche (e) constituée d'au moins un homopolyamide et/ou copolyamide qui est adjacente à la couche barrière au gaz (d),
(f) une couche d'agent adhésif (f) présentant, le cas échéant, plusieurs épaisses,
(g) au moins une couche intérieure (g) constituée d'au moins un copolymère ou homopolymère oléfine thermoplastiques.
(h) une couche d'agent adhésif (h) non-pelable présentant, le cas échéant, plusieurs épaisseurs,
(i) une couche (i) constituée d'au moins un homopolyamide et/ou copolyamide formant une des couches extérieures,
**caractérisée en ce que** la feuille multicouche présente un rétrécissement de ≤ 10 % à 90 °C tant dans le sens machine que dans le sens transversal par rapport à la machine, déterminée comme modification au niveau des dimensions selon DIN 53377, et que cette feuille multicouche ne contient pas de feuille métallique ni de couche à base de métaux ou d'un composé métallique déposée par évaporation.

2. Une feuille multicouche selon revendication 1, **caractérisée en ce que** la feuille multicouche présente un grammage de ≤ 31 g/m².

3. Une feuille multicouche selon l'une des revendications 1 ou 2, **caractérisée en ce que** l'épaisseur totale de la feuille multicouche est de 30 µm au maximum et que la densité moyenne de cette feuille multicouche est de 1,1 g/cm³ au maximum.

4. Une feuille multicouche selon l'une des revendications 1-3, **caractérisée en ce que** la feuille multicouche présente une rétraction de ≤ 7, de préférence ≤ 5 % à 90 °C, tant dans le sens machine que dans le sens transversal par rapport à la machine, déterminée comme modification au niveau des dimensions selon DIN 53377.

5. Une feuille multicouche selon l'une des revendications 1-4, **caractérisée en ce que** la couche barrière au gaz (d) est constituée d'au moins un copolymère éthylène-alcool vinylique, d'au moins un alcool polyvinylique, d'au moins un chlorure de polyvinylidène, d'au moins un homopolyamide ou copolyamide ou d'un mélange d'au moins deux de ces polymères, de manière particulièrement préférée d'au moins un copolymère éthylène-alcool vinylique.

6. Une feuille multicouche selon l'une des revendications 1-5, **caractérisée en ce que** la résistance de percée de cette feuille multicouche est d'au moins 100 N, de préférence de 120 N, déterminée selon DIN 53373.

7. Une feuille multicouche selon l'une des revendications 1-6, **caractérisée en ce que** la perméabilité à l'hélium de la feuille multicouche est de 3000 cm³/(m²·24 h·bar) au maximum, de préférence de 1500 cm³/(m²·24 h·bar) au maximum, de manière particulièrement préférée de 1000 cm³/(m²·24 h·bar) au maximum, déterminée selon DIN 53380-2 à 23 °C et à une humidité de l'air de 0 %.

8. Une feuille multicouche selon l'une des revendications 1-7, **caractérisée en ce que** la perméabilité à l'oxygène de cette feuille multicouche est de 8 cm³/(m²·24 h·bar) au maximum, de préférence de 5 cm³/(m²·24 h·bar) au maximum, de manière particulièrement préférée de 2 cm³/(m²·24 h·bar) au maximum, déterminée selon DIN 53380-2 à 23°C et à une humidité de l'air de 0 %.

9. Une feuille multicouche selon l'une des revendications 1-8, **caractérisée en ce que** la couche (a) est constituée d'au moins un homopolymère ou copolymère éthylène, de préférence d'au moins un homopolymère éthylène à faible densité (PE-BD) et/ou d'au moins un polyéthylène à faible densité linéaire (PE-BDL).

10. Une feuille multicouche selon l'une des revendications 1-9, **caractérisée en ce que** la couche (g) est constituée d'au moins un homopolymère ou copolymère éthylène et/ou d'au moins un homopolymère ou copolymère propylène, de préférence d'au moins un copolymère polypropylène.

11. Une feuille multicouche selon l'une des revendications 1-10, **caractérisée en ce que** les couches (a)-(i) se trouvent dans l'ordre indiqué.

12. Une feuille multicouche selon l'une des revendications 1-11, **caractérisée en ce que** la feuille multicouche présente au moins une couche intérieure (j) et, le cas échéant, une autre couche intérieure (k) ; de préférence, chacune de ces couches intérieures est constituée, de manière identique ou différente, d'au moins un copolymère ou homopolymère oléfine thermoplastique ou comme une couche de la couche d'agent adhésif de plusieurs couches (b) et/ou de la couche d'agent adhésif de plusieurs couches (f).

13. Une feuille multicouche selon l'une des revendications 1-12, **caractérisée en ce que** cette feuille multicouche présente une structure composée d'au moins dix couches.

14. Une feuille multicouche selon l'une des revendications 1-13, **caractérisée en ce que** cette feuille multicouche peut être scellée, imprimée et/ou teinte.

15. Une feuille multicouche selon l'une des revendications 1-14, **caractérisée en ce que** cette feuille multicouche est au moins partiellement transparente et le cas échéant teinte.

16. Une feuille multicouche selon l'une des revendications 1-15, **caractérisée en ce que** cette feuille multicouche peut être fabriquée selon le procédé de coextrusion pour les films soufflés, de préférence selon le procédé de coextrusion Triple-Bubble.

17. Un corps de sustentation constitué, au moins partiellement, d'une feuille multicouche selon l'une des revendications 1-16.

18. Un corps de sustentation selon la revendication 17, **caractérisée en ce que** ce corps de sustentation fait au moins partie d'un aéronef, de préférence d'un dirigeable comme ballon d'une montgolfière, ballon libre, ballon captif, ballon-plafond ou ballon-sonde.

19. Un corps de sustentation selon la revendication 17, **caractérisée en ce que** ce corps de sustentation est un corps flottant qui fait, de préférence, partie d'une bouée, d'un gilet de sauvetage, d'une plate-forme flottante, d'une passerelle, d'un bateau, de préférence d'un bateau ponton, ou d'un aéroglisseur.

20. Un corps de sustentation selon la revendication 17, **caractérisée en ce que** ce corps de sustentation est un ballon qui peut avoir, sous forme gonflée, une forme quelconque, de préférence une forme ellipsoïdale, sphérique, tubulaire ou une forme de coeur, et qui peut être imprimé de motifs si nécessaire.
